# EUROPEAN PATENT SPECIFICATION

(11) **EP 4 558 257 B1**
(45) Date of publication and mention of the grant of the patent: **17.06.2026**
(21) Application number: 23742330.6
(22) Date of filing: 19.07.2023
(51) Int. Cl.: B01D 39/12, B01D 53/46, B01J 23/50, C01B 21/26, C22B 7/00, C22B 11/02, B01J 35/56, B01J 23/46, B01J 35/58

(54) **VOLATILE AND PRECIOUS METAL RECOVERY SYSTEM MADE OF STACKED SILVER-COMPRISING ELEMENTS**
SYSTEM ZUR RÜCKGEWINNUNG VON FLÜCHTIGEN METALLEN UND EDELMETALLEN AUS GESTAPELTEN SILBERHALTIGEN ELEMENTEN
SYSTÈME DE RÉCUPÉRATION DES MÉTAUX VOLATILS ET PRÉCIEUX CONSTITUÉ D'ÉLÉMENTS EMPILÉS COMPRENANT DE L'ARGENT

(30) Priority: 19.07.2022 EP 22185629
(43) Date of publication of application: 28.05.2025
(73) Proprietor: Yara International ASA, 0277 Oslo (NO)
(72) Inventor: WALLER, David, 3931 Porsgrunn (NO)
(74) Representative: De Clercq & Partners
(86) International application number: PCT/EP2023/069983
(87) International publication number: WO 2024/017929

(56) References cited:
- EP-B1- 0 244 921
- GB-A- 668 935
- RU-C1- 2 119 819
- US-A- 4 511 539
- US-A- 5 217 939
- US-A1- 2017 225 152
- US-A1- 2018 029 029
- US-A1- 2022 143 591

## Description

### TECHNICAL FIELD

The present disclosure is in the field of systems for recovering precious metals evaporating in a gas phase.

### INTRODUCTION

Several reactions require a catalyst as they are not or less thermodynamically favoured. Such catalysts are often based upon precious, heavy metals, such as the so-called platinum group metals. The six platinum-group metals are ruthenium, rhodium, palladium, osmium, iridium, and platinum. Other metals upon which catalysts can be based include copper, silver, gold, mercury, iron, cobalt, nickel, zinc and rhenium.

An example of a reaction involving the use of a catalyst comprising precious metals is the oxidation of ammonia into nitric oxide, in the first step of nitric acid production according to the Ostwald process. Ammonia oxidation catalysts commonly comprise platinum and rhodium in the form of an alloy, in order to assist the oxidation of ammonia, that is the fixing of oxygen onto the nitrogen atom of ammonia.

The catalyst and the corresponding support structures in ammonia oxidation burners, commonly named burner baskets, are submitted to temperatures as high as 950 °C. Consequently, a challenge is that platinum evaporates and is lost in the gas phase. Typically, as platinum is expensive, recovery gauzes are present in the ammonia oxidation burner that comprise palladium for recovering the platinum lost in the gas phase. Those recovery gauzes are located in the vicinity of the catalyst gauzes and below the catalyst gauzes, that is downstream of the catalyst gauzes with a gas flow from the top to the bottom of the ammonia oxidation burner. Therefore, the recovery gauzes are also exposed to temperatures as high as 950 °C and the expensive palladium from the palladium based recovery gauze is typically also lost in the gas phase in the ammonia oxidation burner.

### BACKGROUND

GB1343637 relates to a process (Engelhard Minerals & Chemicals Corp, 1971), and a related device, for recovering platinum group metals entrained in a hot gas stream, wherein the gas is passed through a gettering device in the form of an inert ceramic honeycomb structure which is coated with a getter containing gold to absorb the platinum. The document defines gettering as a process wherein the platinum group metals are removed from the gas stream by absorption on a surface and states that gold, silver, palladium, rhodium, and platinum, and combinations thereof are effective getter materials for the platinum group metals. However, in the process/device considered in GB1343637, it is further disclosed that silver or alloys containing silver cannot be used since the silver migrates into the ceramic honeycomb structure and has a harmful effect thereon.

EP63450 (Johnson Matthey, 1982) generally discloses a getter device and a related process for recovery of a precious metal lost from a precious metal-containing catalyst operating at elevated temperature, wherein the getter comprises an agglomeration or assemblage of unwoven fibres made from a metal selected from the group consisting of ruthenium, palladium, iridium, platinum, gold, silver, rhodium and alloys containing one or more or the said metals. This document primarily focuses on Pd/Au alloys and is silent on using silver for recovering volatilized palladium.

GB668935 (Evonik Degussa GmbH, 1949) relates to a process and related device for platinum recovery of volatilized platinum, originating from a catalyst for e.g. the oxidation of ammonia to nitrogen oxides. While it primarily focuses on the use of gold as platinum capture material, it mentions that silver can also be used as platinum trap. In this context, GB668935 claims a process for recovery of platinum, wherein the platinum is trapped on the surface of baffles, disposed at a place where the temperature is at least 700 °C and wherein some of the baffles have a coating of silver or of a silver alloy with gold, palladium or platinum. However, the use of silver presented some disadvantages (e.g. stability), although a silver coating on a metal support (e.g. Ni) was found to be stable.

US20130149207 (Johnson Matthey, 2012) relates to an exhaust system arrangement comprising a platinum and palladium catalyst and a downstream SCR catalyst and a component capable of trapping and/or alloying with a gas phase platinum group metal, wherein this component is typically a metal selected from the group consisting of gold, palladium and silver, preferably a Pd/Au alloy. Accordingly, a solution remains necessary to both achieve flexibility of the recovery agent at a broad range of temperatures and not interfere with the other components of the system comprising the catalytic gauze. EP0244921 (Engelhard Corp., 1991) relates to a system comprising a catalyst comprising at least Pt and Rh, and optionally Pd.

### SUMMARY

The present application addresses one or more of the above indicated needs. The inventors have surprisingly found that metallic silver selectively captures Pd and Pt, but not Rh, from a gas phase comprising these volatile precious metals. In addition, by providing a recovery system comprising metallic Ag which comprises a plurality of metallic silver gauzes or a plurality of layers of metallic silver coated ceramic or glass supports stacked on top of each other, the evaporative loss of Ag from downstream gauzes or layers is minimized, presumably as the gas phase is partially saturated with Ag evaporated from up-stream gauzes or layers.

In one aspect of the invention a system comprising a catalyst comprising at least Pt and Rh, and optionally Pd; and a recovery system comprising metallic Ag for recovering volatile precious metals from a gas phase is disclosed, particularly for selectively recovering volatile Pt and/or Pd from a gas phase comprising Pt, Rh and, optionally, Pd. The system is characterized in that the recovery system comprising metallic silver comprises a plurality of woven or knitted metallic silver gauzes stacked on top of each other, or a plurality of layers of a ceramic or glass support coated with metallic silver, or a ceramic monolith structure, or a combination thereof.

The inventors have found that when the recovery system comprises a plurality of woven or knitted metallic Ag gauzes stacked on top of each other, or a plurality of layers of a ceramic or glass support coated with metallic Ag, or a combination of both, the evaporative losses of Ag in the recovery stem comprising metallic Ag is minimized, presumably because, when there are several Ag recovery elements on top of each other, some elements are upstream with respect to others, that is they are being contacted with the gas stream generated from the catalytic conversion earlier than some other elements. As a result thereof, the vapor phase becomes enriched in volatilized Ag and, consequently, the evaporative loss in Ag from the Ag recovery elements downstream is reduced.

In certain embodiments, the system further comprises a recovery system comprising Pd, positioned downstream of the catalyst and upstream of the recovery system comprising metallic Ag.

In one embodiment according to the system of the invention the recovery system comprising metallic

Ag comprises at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3.

In one embodiment according to the system of the invention the recovery system comprising metallic

Ag comprises from 3 to 50 woven or knitted metallic silver gauzes, or from 10 to 30 ceramic or glass support coated with metallic silver, or a combination of woven or knitted metallic silver gauzes and layers of a ceramic or glass support coated with metallic silver, the number of combined gauzes and layers ranging from 3 to 50.

In one embodiment according to the system of the invention the metallic silver gauzes have a wire diameter ranging from 150 to 400 micron or the thickness of the metallic silver coating on the ceramic or glass support ranges from 150to 400 micron.

In particular embodiments of the system of the invention the silver gauzes of the plurality of woven or knitted metallic silver gauzes have a different wire diameter and/or the layers of the ceramic or glass supports of the plurality of layers of a ceramic or glass support coated with metallic silver have a coating of metallic silver with different coating thickness. More in particular, the wire diameter of the metallic silver gauzes and/or the coating thickness of the ceramic or glass support coated with metallic silver decreases in the downstream direction. Advantageously, the gauzes with thicker wire diameter or the layers with a thicker metallic silver coating are able to provide sacrificial silver, thus promoting the saturation of the gas phase with volatile Ag, thereby minimizing the evaporative Ag losses in the more downstream sections of the recovery system comprising Ag.

In particular embodiments, the system of the present invention is or is part of an ammonia oxidation reactor, also known as an ammonia oxidation burner.

In one aspect of the invention a method for recovering volatile precious metals from a gas phase is disclosed. The method comprises the step of:
• operating a catalyst in an embodiment of the system of the invention thereby generating a gas phase comprising volatile precious metals, in particular thereby generating a gas phase comprising Pt and Rh, and optionally Pd; and
• contacting the gas phase comprising volatile precious metals with the recovery system comprising metallic silver in the system of the invention more in particular further comprising selectively removing Pt and/or Pd (but not Rh) from the gas phase comprising precious metals.

In one embodiment according to the method of the invention the gas phase comprising volatile precious metals has a temperature ranging from 750 °C to about 950 °C.

In one embodiment according to the method of the disclosure, the gas phase comprising volatile precious metals has a temperature ranging from 850 to 950 °C.

In one embodiment according to the method of the invention step (a) comprises operating a catalyst for the catalytic conversion of ammonia into nitric oxide, wherein volatile precious metals are evaporated from the catalyst and, optionally, from a recovery system comprising Pd, thereby producing a gas phase comprising volatile precious metals, particularly producing a gas phase comprising Rh and Pt, and optionally Pd.

In one aspect of the invention a system for the catalytic conversion of ammonia into nitric oxide, is disclosed. The system comprises:
- a catalytic system comprising a catalyst comprising Pt and Rh, and optionally Pd, and operable at a temperature ranging from 750°C to 950 °C; and optionally a recovery system comprising Pd; and, downstream thereof;
- a recovery system comprising silver as specified in the present invention

In one embodiment, the system is operable at a temperature ranging from 850 to 950 °C or from 850 to 930 °C.

In one aspect of the invention the use of the system of the disclosure for the catalytic conversion of ammonia into nitric oxide in the production of nitric acid, is disclosed.

In one aspect of the invention, a method for revamping a system for the catalytic conversion of ammonia into nitric oxide, the system comprising:
∘ a catalyst comprising one or more precious metals selected from the group consisting of Pd, Pt and Rh, particularly comprising Pt and Rh, and optionally Pd; and
∘ a recovery system comprising Pd for recovering a volatile precious metal, particularly volatile Pt, evaporating during the conversion of ammonia into nitric oxide in the catalytic system; into a system of the invention, is disclosed. The method comprises the step of:

- introducing a recovery system comprising metallic silver for recovering volatile precious metals from a gas phase, wherein the recovery system comprising metallic silver comprises a plurality of woven or knitted metallic silver gauzes stacked on top of each other, or a plurality of layers of a ceramic or glass support coated with metallic silver, or a ceramic monolith structure, or a combination thereof.

In one embodiment according to the method for revamping of the invention the method further comprises the step of:
- removing the recovery system comprising Pd.

### DETAILED DESCRIPTION

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the invention are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The invention is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

As defined herein, the term "precious metals" is generally used interchangeably with the term "platinum group metals", namely ruthenium, rhodium, palladium, osmium, iridium, and platinum.

As defined herein, a catalytic system generally comprises a catalyst, particularly a catalyst comprising one or more platinum group metals, and, optionally a recovery system, particularly a recovery system comprising Pd as known in the art. More in particular, a catalytic system as defined herein comprises a catalytic gauze, particularly comprising one or more platinum group metals, even more in particular at least comprising Pt and Rh, and a Pd containing recovery gauze.

As defined herein, the term "selectivity", in particular in the context of the selective recovery of a first precious metal vs a second precious metal, means that at least 2 to 2.5 time more of a first precious metal, i.e. a first platinum group metal, is recovered by a recovery system according to the present disclosure with respect to a second precious metal, i.e. a second platinum group metal. Preferably, the terms "selectivity" or "selective recovery" mean that at least 5 times or at least 10 times more of a first precious metal is recovered by a recovery system according to the present disclosure with respect to a second precious metal. The selectivity or selective recovery may be expressed as wt% or atom% based on the total weight or total atoms, respectively, of the metallic silver making up the recovery system.

A "recovery system" as envisaged herein refers to a system or component designed to capture and recover volatile precious metals from a gas phase, thereby removing the volatile precious metals from the gas phase. In a "recovery system comprising or containing Pd", also referred to herein as "a Pd containing recovery system", Pd is primarily responsible, i.e. makes up at least 70wt% or at least 80wt% of the metals of the recovery system, for the capture of the volatile precious metals, in particular Pt, particularly by forming a Pd containing alloy. The term "recovery system according to the present disclosure" is used interchangeably with a recovery system comprising or coated with metallic Ag.

As used herein, the terms "recover"/"recovery" or similar terms are used in the meaning that the element that is recovered or captured by a recovery system according to the present application is incorporated into the metallic silver. The recovery or capture of a particular element by a recovery system according to the present application can be determined by scanning electron microscope (SEM) with energy dispersive X-ray fluorescence analysis (EDS) and/or by Inductively Coupled Plasma (ICP) Spectroscopy, particularly by comparing the data obtained by these techniques before and after contacting the recovery system according to the present application with a gas comprising one or more volatile platinum group metals, in particular Rh, and Pt and/or Pd.

In one aspect of the invention, a system is disclosed, said system comprising a catalyst comprising precious metals, in particular comprising Pt, Rh, and/or Pd, more in particular comprising at least Pt and Rh, and optionally Pd; and a recovery system comprising metallic Ag for recovering volatile precious metals from a gas phase. The system is characterized in that the recovery system comprising metallic Ag comprises a plurality of woven or knitted metallic silver gauzes stacked on top of each other, or a plurality of layers of a ceramic or glass support coated with metallic silver, or a ceramic monolith structure, or a combination thereof.

Ceramic tiles are particularly suitable as layers, while Rashig rings and pellets are particularly suitable as a support to be coated with silver.

The recovery system comprising metallic silver or coated with metallic silver as envisaged herein is used synonymously with the term "Ag based recovery system", wherein a major proportion, i.e. at least 70wt% or at least 80 wt% up to 100% of the metals is silver. The recovery system comprising metallic silver or coated with metallic silver as envisaged herein typically comprises at least 90 wt% of metallic silver, particularly at least 95 wt% of metallic silver, more particularly at least 97 wt%, at least 98 wt% or even at least 99 wt% of metallic silver, such as at least 99.5 wt% metallic silver, based on the total weight of metals making up the gauze or the coating. It is understood that the composition of the recovery system comprising metallic silver will change during operation, in particular due to the capture of volatile precious metals and due to the evaporative loss of metallic silver.

The inventors have found that when the recovery system comprising metallic Ag comprises a plurality of woven or knitted metallic Ag gauzes stacked on top of each other, or a plurality of layers of a ceramic or glass support coated with metallic Ag, or a combination of both, the evaporative losses of Ag during operation of the recovery system comprising metallic Ag is minimized. Presumably, when there are several Ag containing recovery elements stacked on top of each other, some elements are upstream with respect to others, that is they are being contacted with the gas stream generated from the catalytic conversion mediated by the catalyst earlier than some other Ag containing recovery elements. As a result thereof, the vapor phase becomes enriched in volatile Ag and, consequently, the evaporative loss in Ag from the Ag recovery elements downstream is reduced.

In one embodiment according to the system of the invention, the recovery system comprising metallic

Ag comprises at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3.

When at least 3 Ag-coated recovery elements constitute the Ag-coated recovery system, the loss of silver is reduced. Hence, in order to reduce Ag losses, it is beneficial to use at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3.

In one embodiment according to the system of the invention, the recovery system comprising metallic

Ag comprises from 3 to 50 woven or knitted metallic silver gauzes, or from 10 to 30 ceramic or glass support coated with metallic silver, or a combination of woven or knitted metallic silver gauzes and layers of a ceramic or glass support coated with metallic silver, the number of combined gauzes and layers ranging from 3 to 50.

Optionally, the system may further comprise a recovery system comprising Pd, downstream of the catalyst, for recovering a volatile precious metal evaporating from the catalyst, such as Pt. It is understood that the metallic Ag based recovery system according to the present invention is positioned downstream of both the catalyst and the Pd containing recovery system.

In one embodiment according to the system of the invention, the system is or is part of an ammonia oxidation burner, whereby nitric oxide is generated by oxidation of ammonia. Stated differently, in certain embodiments, the catalytic system is a system for the catalytic conversion of ammonia into nitric oxide, for the generation of nitric acid. The present invention thus considers an ammonia oxidation burner comprising a system according to the present invention

In one embodiment according to the system of the invention, the silver gauzes have a wire diameter ranging from 150 to 400 µm and/or the thickness of the silver coating on the ceramic or glass support ranges from 150 to 400 µm.

Using such gauzes offers increased surface area such that the gas is optimally contacted with the gauze, leading to optimal trapping of the precious metal in the gas phase and subsequent formation of an alloy of the metal with Ag, for the recovery of the precious metal.

The person skilled in the art will, without difficulty, optimize the diameter of the silver gauzes or the thickness of the coating such that the quantity of silver present on the gauze is sufficient to achieve the target silver recovery. The system of the invention is flexible in that the different gauzes present in the recovery system comprising metallic Ag can have different diameters and/or that the layers of a ceramic or glass support coated with metallic silver can have a different thickness of the Ag coating. In particular embodiments, the wire diameter of the metallic silver gauzes and/or the coating thickness of the ceramic or glass support coated with metallic silver decreases in the downstream direction. This means that the Ag gauzes or Ag coated supports most upstream have a larger diameter or a thicker Ag coating, respectively, to offer some sacrificial silver, that is silver that is going to evaporate and contribute to the saturation in volatile silver of the gas phase, thereby reducing the evaporative losses of silver from the Ag gauzes or Ag coated supports of the recovery system comprising Ag further downstream. Stated differently, the wire diameter of the metallic silver gauzes and/or the coating thickness of the ceramic or glass support coated with metallic silver decreases with increasing distance from the catalyst.

In one aspect of the invention, a method for recovering volatile precious metals from a gas phase is disclosed. The method comprises the step of (a) operating a catalyst in the system according to the present invention, thereby generating a gas phase comprising volatile precious metals, particularly a gas phase comprising Rh and Pt, and optionally Pd; and
(b) contacting the gas phase comprising volatile precious metals with the recovery system comprising metallic silver in the system according to the present invention

In particular, the catalyst comprises one or more precious metals, in particular Pt and Rh, and optionally Pd.

The recovery system comprising metallic Ag of the invention enabling the selective recovery of a precious metal from the gas phase, in particular recovering Pt and Pd, but not Rh, it is of particular benefit to use the recovery system of the invention in processes generating a phase comprising a precious metal, through contacting the generated gas phase with the recovery system of the disclosure, in order to recover the precious metal in the gas phase, particularly for selectively recovering Pt and/or Pd vs Rh.

In one embodiment according to the method of the invention, the gas phase comprising volatile precious metals has a temperature ranging from 750 °C to about 950 °C.

The inventors have established that the method of the invention can be performed within a broad temperature range for the gas phase generated by the catalytic system and going through the recovery system. Hence the method of the disclosure can be applied to a broad range of catalytic processes. When the catalytic is performed at temperatures as low as 750 °C, the energy consumption of the production process is reduced. Further the evaporation of the Pd, Pt and Ag metals is reduced, which in turn reduces the loss of those metals in the production process.

In one embodiment according to the method of the invention, the gas phase comprising volatile precious metals has a temperature ranging from 850 to 950 °C or from 850 to 930°C.

As explained above, in the presence of a plurality of woven or knitted metallic Ag gauzes stacked on top of each other, or a plurality of layers of a ceramic or glass support coated with metallic Ag, a monolith structure or a combination thereof, the loss of Ag in the evaporation phase is reduced. Presumably, when there are several Ag recovery elements on top of each other, some elements are upstream with respect to others, that is they are being contacted with the gas stream generated from the catalytic conversion earlier than some other elements. As a result thereof, the vapor phase becomes enriched in Ag and, consequently, the evaporative loss in Ag from the Ag recovery elements downstream is reduced.

Hence, for the catalytic processes to be performed at temperatures as high as from 850 to 950°C or from 850 to 930°C, it is beneficial to practice the method of the invention using a recovery system comprising a plurality of woven or knitted metallic Ag gauzes stacked on top of each other, or a plurality of layers of a ceramic or glass support coated with metallic Ag, or a monolith structure or a combination thereof. This means that it is particularly beneficial to use the system of the disclosure in catalyst process performed at temperatures ranging from 850 to 950°C or from 850 to 930 °C.

In one embodiment according to the method of the invention, the method, particularly step (a) of the method, further comprises the step of operating a catalyst for the catalytic conversion of ammonia into nitric oxide, wherein volatile precious metals are evaporated from the catalytic system, particularly from the catalyst, and, optionally, from a recovery system comprising Pd, thereby producing a gas phase comprising volatile precious metals, particularly producing a gas phase comprising Pt and Rh, and optionally Pd.

Nitric acid produced through the oxidation of ammonia, according to the Ostwald process is a widely employed industrial process, the first step being the oxidation of ammonia into nitric oxide, at temperatures ranging from 800 to 950 °C onto precious metal-containing catalytic gauzes. The method of the invention is therefore well designed for being practiced in ammonia oxidation burners, in order to recover the precious metal lost from the catalytic gauzes after their evaporation.

In one embodiment according to the method of the invention, the method is used for recovering volatile precious metals, evaporating, during the catalytic conversion of ammonia into nitric oxide, from the catalytic system used therein, wherein the catalytic system comprises Pt and Rh.

The catalytic gauzes that are part of ammonia oxidation burners comprise platinum and rhodium. It is, therefore, beneficial to practice the method of the disclosure in ammonia oxidation burners, using Pt and Rh-containing catalytic gauzes.

In one embodiment according to the method of the invention, the method is used for recovering volatile precious metals, evaporating, during the catalytic conversion of ammonia into nitric oxide, from the catalytic system used therein, wherein the catalytic system comprises Pt, Rh and Pd.

In conventional ammonia oxidation burners, a recovery gauze comprising Pd is included along with a Pt and Rh catalytic gauze. In this manner, the Pd in the recovery gauze traps the volatile Pt evaporating during the catalytic conversion, which allows for Pt recovery. However, precious volatile Pd is lost in the gas phase. By further utilizing an Ag-coated recovery system according to the present invention during the conversion of ammonia into nitric oxide in the production of nitric acid, also the Pd evaporating, as well as Pt non-trapped by the Pd recovery gauze, can be recovered through the formation of Pd-Ag, Pt-Ag or Pt-Pd-Ag alloys.

In one aspect of the invention, a system for the catalytic conversion of ammonia into nitric oxide is disclosed. The system comprises a catalytic system comprising Pt and Rh and operable at a temperature ranging from 750 °C to 950 °C; and, downstream thereof; a recovery system comprising metallic Ag according to the recovery system of the invention.

The system of the invention allows to produce nitric acid from ammonia, using a conventional Pt and Rh-based catalytic gauze, typically performed at temperatures ranging from 800 °C to 950 °C. The inventors have found that the method of the invention can be performed within a broad temperature range for the gas phase generated by the catalytic system and going through the recovery system comprising metallic silver. Further, the inventors have established that it is possible to perform the catalytic conversion of ammonia into nitric oxide in the production of nitric acid, at temperatures as low as 750 °C , while retaining above 90% conversion of ammonia into nitric oxide.

When the catalytic conversion is performed at temperatures as low as 750 °C, the energy consumption of the production process is reduced. Further the evaporation of precious metals is reduced, which in turn reduces the loss of those metals in the production process. Through the presence of the recovery system comprising metallic Ag of the invention, the precious Pt metal from the catalytic gauze can in any event be recovered.

In one embodiment according to the system of the invention, the catalytic system further comprises Pd, such as in the form of a recovery system comprising Pd, in particular a recovery gauze comprising Pd.

In conventional ammonia oxidation burners, a Pd containing recovery gauze is included along with a Pt and Rh catalytic gauze. In this manner, the Pd in the recovery gauze traps the volatile Pt evaporating during the catalytic conversion, which allows for Pt recovery. However, precious volatile Pd is lost in the gas phase. By further utilizing an Ag-coated recovery system during the conversion of ammonia into nitric acid, also the Pd evaporating, as well as Pt non-trapped by the Pd recovery gauze, can be recovered through the formation of Pd-Ag, Pt-Ag, or Pt-Pd-Ag alloys.

In one embodiment according to the system of the invention, the system is operable at a temperature ranging from 850 to 950 °C or from 850 to 930 °C.

This temperature range is especially suited for converting ammonia to nitric oxide and achieving a selectivity for the conversion above 96%, while minimizing the drawbacks associated with high temperature operation such as energy consumption and equipment damage.

In one aspect of the invention, the use of the system of the disclosure for the catalytic conversion of ammonia into nitric oxide in the production of nitric acid, is disclosed.

In one aspect of the invention, a method for revamping a system for the catalytic conversion of ammonia into nitric oxide, the system comprising a catalytic system comprising a catalyst comprising one or more precious metals selected from the group consisting of Pd, Pt and Rh, particularly comprising Pt and Rh, and, optionally, Pd; and a Pd-containing recovery system for recovering a volatile precious metal evaporating during the conversion of ammonia into nitric oxide in the catalytic system; into a system of the disclosure, is disclosed. The method comprises the step of introducing a recovery system comprising metallic Ag according to the recovery system.

As described above, Pd containing recovery gauzes are typically integrated in a conventional ammonia oxidation burner for performing the catalytic conversion of ammonia into nitric oxide, in the production of nitric acid. That is a Pd containing recovery gauze is combined with a conventional Pt and Rh-containing catalytic gauze and the recovery gauze comprising Pd and the catalytic gauze together form the catalytic system. In the presence of Pd containing recovery gauzes, when the catalytic conversion of ammonia into nitric acid is performed at temperatures of 800 °C or higher, such as up to 950 °C, the Pt evaporated from the catalytic gauze is recovered by the Pd containing recovery gauze. The inventors have found that it is possible to combine an Ag-coated recovery system with a catalytic system comprising a catalytic Pt and Rh gauze and a Pd recovery gauze: not only is the Pt recovery increased through the presence of both a Pd and an Ag containing recovery system, such as a Pd and an Ag-coated recovery system, the presence of the Ag-coated recovery system according to the present invention further results in the recovery of the Pd evaporated from the Pd containing recovery gauzes. Said otherwise, both Pt and Pt are recovered and the recovery of the precious Pt metal from the Pd containing recovery gauze is not associated with a loss of the precious Pd metal.

In one embodiment according to the method for revamping of the disclosure, the method further comprises the step of removing the Pd-containing recovery system.

Alternatively, since Ag is suitable for recovering the volatile precious Pt metal, it is possible to perform the conversion of ammonia into nitric oxide, in the production of nitric acid, solely with a Pt and Rh-based catalytic gauze as part of the catalytic system, that is in the absence of a Pd containing recovery gauze, thus simplifying the system.

### EXAMPLE

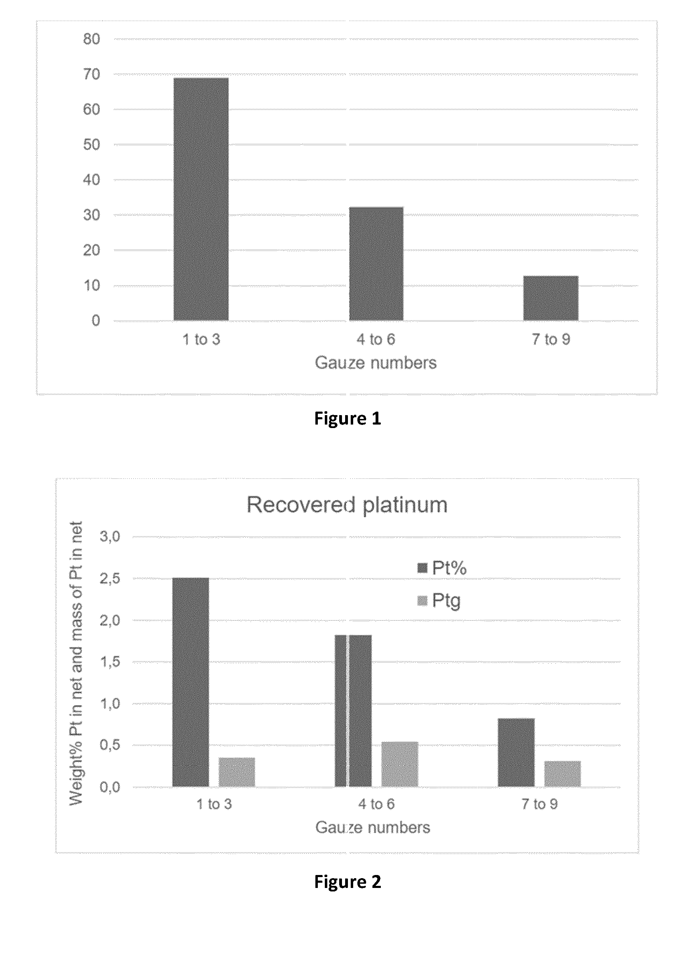

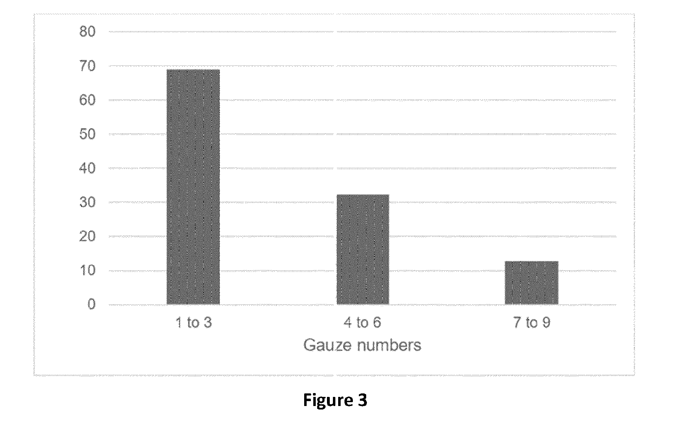

Three sets Ag nets, each set comprising in turn 3 Ag nets, were installed in a 22 cm pipe at three different locations downstream of a catalytic gauze for converting ammonia into nitric oxide and operated at about 840 °C, exposing them to about that of the catalytic gauze. The catalytic gauze comprised Pt and Rh, together accounting for 5 weight% of the gauze. The Ag nets were sourced from K. A. Rasmussen and were 85 µm warp knitted gauzes. After a combustion campaign of 22 days, in which 6.83 t of ammonia was combusted producing about 25.3 t of nitric acid, the gauzes were recovered for analysis. Mass changes and gauze compositions are summarized in Table 1. The 5 weight % Pt/Rh combustion gauzes lost 4.22g. Pt and Pd were captured on the Ag nets, however Rh was not recovered and the Rh loss accounted for only 5 % of the weight of the lost Pt. The Ag loss decreased for the second and third sets (See Figure 1). The evaporative loss of Ag from downstream gauzes was reduced as the gas phase is partially saturated with Ag from up-stream gauzes. The concentration of platinum in the Ag nets decreased from upper to lower gauzes. However, the highest quantity of platinum was found in the second set of gauzes (see Figure 2). This can be associated with the large loss of Ag from the upper set of Ag nets. The efficiency of platinum recovery on the Ag nets naturally followed the same trend as mass of platinum recovered on the nets (See Figure 3).

The recovery system used in the present example recovered about 28% of the Pt lost from the catalytic gauze, with 8.2%, 12.6% and 7.2% recovered by the upper, middle and lower set of Ag nets, respectively.

**Table 1. Analysis of the Ag nets**

| Location (gauze number) | Installed mass (g) | After exposure | | | | | | | |
|---|---|---|---|---|---|---|---|---|---|
| | | Total mass (g) | Pt (wt%) | Pd (wt%) | Ag (wt%) | Pt (g) | Pd (g) | Ag (g) | Ag loss (g - %) |
| Upper (gauze 1-3) | 42.87 | 13.77 | 2.51 | 0.74 | 96.75 | 0.35 | 0.10 | 13.32 | 29.6 - 68.9% |
| Middle (gauze 4-6) | 42.60 | 29.48 | 1.82 | 0.42 | 97.76 | 0.54 | 0.12 | 28.82 | 13.8 - 32.3% |
| Lower (gauze 7-9) | 43.48 | 38.29 | 0.82 | 0.12 | 99.06 | 0.31 | 0.05 | 37.93 | 5.6 - 12.7% |
| *Total* | | | | | | 1.20 | 0.27 | 80.07 | 48.9 - 37.9% |

## Claims

1. A system comprising:
- a catalyst comprising at least Pt and Rh, and optionally Pd; and
- a recovery system comprising metallic silver for recovering volatile precious metals from a gas phase, **characterized in that** the recovery system comprising metallic silver comprises a plurality of woven or knitted metallic silver gauzes stacked on top of each other, or a plurality of layers of a ceramic or glass support coated with metallic silver, or a ceramic monolith structure, or a combination thereof; wherein the silver gauzes of the plurality of woven or knitted metallic silver gauzes have a different wire diameter and/or wherein the layers of the ceramic or glass supports of the plurality of layers of a ceramic or glass support coated with metallic silver have a coating of metallic silver with different coating thickness; and
wherein the wire diameter of the metallic silver gauzes and/or the coating thickness of the ceramic or glass support coated with metallic silver decreases in the downstream direction.

2. The system according to claim 1, further comprising a recovery system comprising Pd, wherein the recovery system comprising Pd is located downstream of the catalyst and upstream of the recovery system comprising metallic silver.

3. The system according to claim 1 or 2, wherein the recovery system comprising metallic silver comprises at least 3 woven or knitted metallic silver gauzes, or at least 3 ceramic or glass support coated with metallic silver, or a combination of woven or knitted metallic silver gauzes and layers of a ceramic or glass support coated with metallic silver, wherein the number of combined gauzes and layers is at least 3.

4. The system according to claim 3, wherein the recovery system comprising metallic silver comprises from 3 to 50 woven or knitted metallic silver gauzes, or from 10 to 30 ceramic or glass support coated with metallic silver, or a combination of woven or knitted metallic silver gauzes and layers of a ceramic or glass support coated with metallic silver, the number of combined gauzes and layers ranging from 3 to 50.

5. The system according to any one of claims 1 to 4, wherein the metallic silver gauzes have a wire diameter ranging from 150 to 400 µm, or wherein the thickness of the metallic silver coating on the ceramic of glass support ranges from 150 to 400 µm.

6. The system according to any one of claims 1 to 5, wherein the system is or is part of an ammonia oxidation reactor.

7. A method for recovering volatile precious metals from a gas phase, comprising the steps of:
(a) operating a catalyst in the system according to any one of claims 1 to 6, thereby generating a gas phase comprising volatile precious metals, wherein the gas phase comprises (i) **Rh** and (ii) Pt and/or Pd; and
(b) contacting the gas phase comprising volatile precious metals, wherein the gas phase comprises (i) **Rh** and (ii) Pt and/or Pd, with the recovery system comprising metallic silver in the catalytic system according to any one of claims 1 to 6, and selectively removing Pt and/or Pd from the gas phase comprising volatile precious metals.

8. The method according to claim 7, wherein the gas phase comprising volatile precious metals has a temperature ranging from 750 °C to about 950 °C, particularly a temperature ranging from 850 to 950 °C or from 850 to 930 °C.

9. The method according to claim 7 or 8, wherein the catalyst comprises Pt and Rh.

10. The method according to any one of claims 7 to 9, wherein step (a) comprises operating a catalyst for the catalytic conversion of ammonia into nitric oxide, wherein volatile precious metals are evaporated from the catalyst and, optionally from a recovery system comprising Pd, thereby producing a gas phase comprising **Rh** and Pt, and optionally Pd.

11. Use of the system according to any one of claims 1 to 6 for the catalytic conversion of ammonia into nitric oxide in the production of nitric acid.

12. A method for revamping a system for the catalytic conversion of ammonia into nitric oxide, the system comprising:
• a catalytic system comprising:
∘ a catalyst comprising one or more precious metals selected from the group consisting of Pd, Pt and Rh; and
∘ a recovery system comprising Pd for recovering volatile Pt evaporating during the conversion of ammonia into nitric oxide in the catalytic system;
into a system according to any one of claims 1 to 6, comprising the step of:
• introducing a recovery system comprising metallic silver for recovering volatile precious metals from a gas phase, downstream of the catalytic system, wherein the recovery system comprising metallic silver comprises a plurality of woven or knitted metallic silver gauzes stacked on top of each other, or a plurality of layers of a ceramic or glass support coated with metallic silver, or a ceramic monolith structure, or a combination thereof; wherein the silver gauzes of the plurality of woven or knitted metallic silver gauzes have a different wire diameter and/or wherein the layers of the ceramic or glass supports of the plurality of layers of a ceramic or glass support coated with metallic silver have a coating of metallic silver with different coating thickness; and wherein the wire diameter of the metallic silver gauzes and/or the coating thickness of the ceramic or glass support coated with metallic silver decreases in the downstream direction.

13. The method according to claim 12 further comprising the step of:
• removing the recovery system comprising Pd.

## Patentansprüche

1. System umfassend:
- einen Katalysator umfassend wenigstens Pt und Rh und gegebenenfalls Pd; und
- ein Rückgewinnungssystem, das metallisches Silber umfasst, zum Rückgewinnen flüchtiger Edelmetalle aus einer Gasphase, **dadurch gekennzeichnet, dass** das Rückgewinnungssystem, das metallisches Silber umfasst, eine Vielzahl von übereinander gestapelten gewebten oder gestrickten metallischen Silbernetzen oder eine Vielzahl von Schichten eines mit metallischem Silber beschichteten Keramik- oder Glasträgers oder eine keramische Monolithstruktur oder eine Kombination davon umfasst;
wobei die Silbernetze der Vielzahl von gewebten oder gestrickten metallischen Silbernetze einen unterschiedlichen Drahtdurchmesser aufweisen und/oder wobei die Schichten der Keramik- oder Glasträger der Vielzahl von Schichten eines Keramik- oder Glasträgers, die mit metallischem Silber beschichtet sind, eine Beschichtung aus metallischem Silber mit unterschiedlicher Beschichtungsdicke aufweisen; und
wobei der Drahtdurchmesser der metallischen Silbernetze und/oder die Beschichtungsdicke des mit metallischem Silber beschichteten Keramik- oder Glasträgers in der stromabwärtigen Richtung abnehmen.

2. System nach Anspruch 1, ferner umfassend ein Rückgewinnungssystem, das Pd umfasst, wobei das Rückgewinnungssystem, das Pd umfasst, stromabwärts des Katalysators und stromaufwärts des Rückgewinnungssystems, das metallisches Silber umfasst, angeordnet ist.

3. System nach Anspruch 1 oder 2, wobei das Rückgewinnungssystem, das metallisches Silber umfasst, wenigstens 3 gewebte oder gestrickte metallische Silbernetze oder wenigstens 3 Keramik- oder Glasträger, die mit metallischem Silber beschichtet sind, oder eine Kombination von gewebten oder gestrickten metallischen Silbernetzen und Schichten eines Keramik- oder Glasträgers, die mit metallischem Silber beschichtet sind, umfasst, wobei die Anzahl von kombinierten Netzen und Schichten wenigstens 3 beträgt.

4. System nach Anspruch 3, wobei das Rückgewinnungssystem, das metallisches Silber umfasst, von 3 bis 50 gewebte oder gestrickte metallische Silbernetze oder von 10 bis 30 Keramik- oder Glasträger, die mit metallischem Silber beschichtet sind, oder eine Kombination von gewebten oder gestrickten metallischen Silbernetzen und Schichten eines Keramik- oder Glasträgers, die mit metallischem Silber beschichtet sind, umfasst, wobei die Anzahl von kombinierten Netzen und Schichten von 3 bis 50 beträgt.

5. System nach einem der Ansprüche 1 bis 4, wobei die metallischen Silbernetze einen Drahtdurchmesser in dem Bereich von 150 bis 400 µm aufweisen oder wobei die Dicke der metallischen Silberbeschichtung auf der Keramik des Glasträgers in dem Bereich von 150 bis 400 µm liegt.

6. System nach einem der Ansprüche 1 bis 5, wobei das System ein Ammoniakoxidationsreaktor oder ein Teil davon ist.

7. Verfahren zur Rückgewinnung flüchtiger Edelmetalle aus einer Gasphase, umfassend die Schritte:
(a) Betreiben eines Katalysators in dem System nach einem der Ansprüche 1 bis 6, wodurch eine Gasphase erzeugt wird, die flüchtige Edelmetalle umfasst, wobei die Gasphase (i) Rh und (ii) Pt und/oder Pd umfasst; und
(b) Inkontaktbringen der Gasphase, die flüchtige Edelmetalle umfasst, wobei die Gasphase (i) Rh und (ii) Pt und/oder Pd umfasst, mit dem Rückgewinnungssystem, das metallisches Silber umfasst, in dem katalytischen System nach einem der Ansprüche 1 bis 6 und selektives Entfernen von Pt und/oder Pd aus der Gasphase, die flüchtige Edelmetalle umfasst.

8. Verfahren nach Anspruch 7, wobei die Gasphase, die flüchtige Edelmetalle umfasst, eine Temperatur in dem Bereich von 750 °C bis etwa 950 °C, insbesondere eine Temperatur in dem Bereich von 850 bis 950 °C oder von 850 bis 930 °C, aufweist.

9. Verfahren nach Anspruch 7 oder 8, wobei der Katalysator Pt und **Rh** umfasst.

10. Verfahren nach einem der Ansprüche 7 bis 9, wobei Schritt (a) Betreiben eines Katalysators für die katalytische Umwandlung von Ammoniak in Stickoxid umfasst, wobei flüchtige Edelmetalle aus dem Katalysator und gegebenenfalls aus einem Rückgewinnungssystem, das Pd umfasst, verdampft werden, wodurch eine Gasphase, die Rh und Pt und gegebenenfalls Pd umfasst, erzeugt wird.

11. Verwendung des Systems nach einem der Ansprüche 1 bis 6 zur katalytischen Umwandlung von Ammoniak in Stickoxid bei der Herstellung von Salpetersäure.

12. Verfahren zum Modernisieren eines Systems zur katalytischen Umwandlung von Ammoniak in Stickoxid, wobei das System umfasst:
• ein katalytisches System umfassend:
∘ einen Katalysator umfassend ein oder mehrere Edelmetalle ausgewählt aus der Gruppe bestehend aus Pd, Pt und Rh; und
∘ ein Rückgewinnungssystem, das Pd umfasst, zur Rückgewinnung von flüchtigem Pt, das während der Umwandlung von Ammoniak in Stickoxid in dem katalytischen System verdampft;
in ein System nach einem der Ansprüche 1 bis 6, umfassend den Schritt:
• Einführen eines Rückgewinnungssystems, das metallisches Silber umfasst, zum Rückgewinnen flüchtiger Edelmetalle aus einer Gasphase stromabwärts des katalytischen Systems, wobei das Rückgewinnungssystem, das metallisches Silber umfasst, eine Vielzahl von gewebten oder gestrickten metallischen Silbernetzen, die übereinander gestapelt sind, oder eine Vielzahl von Schichten eines Keramik- oder Glasträgers, die mit metallischem Silber beschichtet sind, oder eine keramische Monolithstruktur oder eine Kombination davon umfasst; wobei die Silbernetze der Vielzahl von gewebten oder gestrickten metallischen Silbernetzen einen unterschiedlichen Drahtdurchmesser aufweisen und/oder wobei die Schichten der Keramik- oder Glasträger der Vielzahl von Schichten eines Keramik- oder Glasträgers, die mit metallischem Silber beschichtet sind, eine Beschichtung aus metallischem Silber mit unterschiedlicher Beschichtungsdicke aufweisen; und wobei der Drahtdurchmesser der metallischen Silbernetze und/oder die Beschichtungsdicke des mit metallischem Silber beschichteten Keramik- oder Glasträgers in stromabwärtiger Richtung abnehmen.

13. Verfahren nach Anspruch 12, ferner umfassend den Schritt:
• Entfernen des Rückgewinnungssystems, das Pd umfasst.

## Revendications

1. Système comprenant :
- un catalyseur comprenant au moins du Pt et du Rh, et éventuellement du Pd ; et
- un système de récupération comprenant de l'argent métallique pour récupérer des métaux précieux volatils d'une phase gazeuse, **caractérisé en ce que** le système de récupération comprenant de l'argent métallique comprend une pluralité de gazes d'argent métallique tissées ou tricotées empilées les unes sur les autres, ou une pluralité de couches d'un support en céramique ou en verre revêtu d'argent métallique, ou une structure monolithe céramique, ou une combinaison correspondante ;
dans lequel les gazes d'argent de la pluralité de gazes d'argent métallique tissées ou tricotées ont un diamètre de fil différent et/ou dans lequel les couches des supports en céramique ou en verre de la pluralité de couches d'un support en céramique ou en verre revêtu d'argent métallique ont un revêtement d'argent métallique ayant une épaisseur de revêtement différente ; et
dans lequel le diamètre du fil des gazes d'argent métallique et/ou l'épaisseur de revêtement du support en céramique ou en verre revêtu d'argent métallique diminue vers l'aval.

2. Système selon la revendication 1, comprenant en outre un système de récupération comprenant du Pd, dans lequel le système de récupération comprenant du Pd est situé en aval du catalyseur et en amont du système de récupération comprenant de l'argent métallique.

3. Système selon la revendication 1 ou 2, dans lequel le système de récupération comprenant de l'argent métallique comprend au moins 3 gazes d'argent métallique tissées ou tricotées, ou au moins 3 supports en céramique ou en verre revêtus d'argent métallique, ou une combinaison de gazes d'argent métallique tissées ou tricotées et de couches d'un support en céramique ou en verre revêtu d'argent métallique, dans lequel le nombre de gazes et de couches combinées est d'au moins 3.

4. Système selon la revendication 3, dans lequel le système de récupération comprenant de l'argent métallique comprend de 3 à 50 gazes d'argent métallique tissées ou tricotées, ou de 10 à 30 supports en céramique ou en verre revêtus d'argent métallique, ou une combinaison de gazes d'argent métallique tissées ou tricotées et de couches d'un support en céramique ou en verre revêtu d'argent métallique, le nombre de gazes et de couches combinées allant de 3 à 50.

5. Système selon l'une quelconque des revendications 1 à 4, dans lequel les gazes d'argent métallique ont un diamètre de fil allant de 150 à 400 µm, ou dans lequel l'épaisseur du revêtement d'argent métallique sur le support en céramique ou en verre est comprise entre 150 et 400 µm.

6. Système selon l'une quelconque des revendications 1 à 5, dans lequel le système est ou fait partie d'un réacteur d'oxydation d'ammoniac.

7. Procédé de récupération de métaux précieux volatils d'une phase gazeuse, comprenant les étapes de :
(a) exploitation d'un catalyseur dans le système selon l'une quelconque des revendications 1 à 6, générant ainsi une phase gazeuse comprenant des métaux précieux volatils, la phase gazeuse comprenant (i) du Rh et (ii) du Pt et/ou du Pd ; et
(b) mise en contact de la phase gazeuse comprenant des métaux précieux volatils, dans laquelle la phase gazeuse comprend (i) du Rh et (ii) du Pt et/ou du Pd, avec le système de récupération comprenant de l'argent métallique dans le système catalytique selon l'une quelconque des revendications 1 à 6, et élimination sélective du Pt et/ou du Pd de la phase gazeuse comprenant des métaux précieux volatils.

8. Procédé selon la revendication 7, dans lequel la phase gazeuse comprenant des métaux précieux volatils a une température allant de 750 °C à environ 950 °C, en particulier une température allant de 850 à 950 °C ou de 850 à 930 °C.

9. Procédé selon la revendication 7 ou 8, dans lequel le catalyseur comprend du Pt et du Rh.

10. Procédé selon l'une quelconque des revendications 7 à 9, dans lequel l'étape (a) comprend l'exploitation d'un catalyseur pour la conversion catalytique d'ammoniac en oxyde nitrique, dans lequel des métaux précieux volatils sont évaporés du catalyseur et, éventuellement, d'un système de récupération comprenant du Pd, produisant ainsi une phase gazeuse comprenant du Rh et du Pt, et éventuellement du Pd.

11. Utilisation du système selon l'une quelconque des revendications 1 à 6 pour la conversion catalytique d'ammoniac en oxyde nitrique dans la production d'acide nitrique.

12. Procédé de réaménagement d'un système de conversion catalytique d'ammoniac en oxyde nitrique, le système comprenant :
• un système catalytique comprenant :
∘ un catalyseur comprenant un ou plusieurs métaux précieux sélectionnés dans le groupe constitué du Pd, du Pt et du Rh ; et
∘ un système de récupération comprenant du Pd pour récupérer du Pt volatil s'évaporant lors de la conversion d'ammoniac en oxyde nitrique dans le système catalytique ;
en un système selon l'une quelconque des revendications 1 à 6, comprenant l'étape de :
• introduction d'un système de récupération comprenant de l'argent métallique pour récupérer des métaux précieux volatils d'une phase gazeuse, en aval du système catalytique, dans lequel le système de récupération comprenant de l'argent métallique comprend une pluralité de gazes d'argent métallique tissées ou tricotées empilées les unes sur les autres, ou une pluralité de couches d'un support en céramique ou en verre revêtu d'argent métallique, ou une structure monolithe en céramique ou une combinaison de celles-ci, dans lequel les gazes d'argent de la pluralité de gazes d'argent métallique tissées ou tricotées ont un diamètre de fil différent et/ou dans lequel les couches des supports en céramique ou en verre de la pluralité de couches d'un support en céramique ou en verre revêtu d'argent métallique présentent un revêtement d'argent métallique ayant une épaisseur de revêtement différente ; et dans lequel le diamètre du fil des gazes d'argent métallique et/ou l'épaisseur de revêtement du support en céramique ou en verre revêtu d'argent métallique diminue vers l'aval.

13. Procédé selon la revendication 12, comprenant en outre l'étape de :
• élimination du système de récupération comprenant du Pd.
